# EUROPEAN PATENT APPLICATION

(11) **EP 1 611 992 A1**
(43) Date of publication of application: **04.01.2006**
(21) Application number: 05252691.0
(22) Date of filing: 29.04.2005
(51) Int. Cl.: B23P 15/24, B28B 7/34

(54) **Method of forming a molding surface for a composite shingle mold**

(30) Priority: 25.05.2004 US 853690
(71) Applicant: Tamko Roofing Products Inc., Joplin, Missouri 64802 (US)
(72) Inventor: Carlson, Dennis Dean, Lamar Missouri 64759 (US)
(74) Representative: Thomson, Craig Richard

(57) **Abstract**

Improvements in composite shingle manufacturing are realized through the use of an acid etching solution along with machining to generate a molding surface particularly well suited for the molding of shingles having the look of "natural" materials, such as slate. Upon the selection of a specific pattern that will define the primary shape for molded composite shingles, machine tools are used to cut the pattern into the base mold to form a molding surface. Finer details are then added to the molding surface through the use of an acid etch solution. The base mold with the sculpted molding surface may then be used in traditional molding techniques to produce composite shingles having an exposed surface that closely replicates the appearance of naturally occurring materials.

## Description

### CROSS-REFERENCE TO RELATED APPLICATIONS

None.

### STATEMENT REGARDING FEDERALLY SPONSORED RESEARCH OR DEVELOPMENT

Not Applicable.

### BACKGROUND OF THE INVENTION

A variety of roofing products have historically been used to provide a final environmental barrier or covering over a roof deck of a building. With respect to buildings that have a pitched roof, shingles are the most common choice for a top layer protective covering. Shingles are typically installed on top of a waterproof underlayer that has been applied to the roof deck, and are arranged in a series of partially overlapping rows. This overlapping serves to reduce the potential pathways of water and other debris around the perimeter of each shingle to the roof deck, and to cover up any attachment points where fasteners or other means are used to attach the given shingle to the roof deck. Thus, shingles provide a protective layer that will block out various items (e.g., snow and ice, tree limbs, rodents, etc.) from reaching the roof deck. Common materials used to make roofing shingles include asphalt, wood, slate, concrete, and composites, but may include other natural or synthetic materials.

The use of slate as a roofing shingle material is quite popular due to the perception that slate is very durable and provides a "solid" look to a building. Homeowners often utilize slate shingles to upgrade the quality of their roof covering and to increase the value of their home. Certain retail establishments and the like also choose slate shingles to present the customer with a building that is neat in appearance and has a reassuring strength.

While slate can be a long lasting shingle material, significant manual labor is required to shape a natural piece of slate into a number of individual shingles. Slate is also subject to fracture and/or cracking if it is dropped on a hard surface or trampled on, and is relatively heavy and expensive when compared to other widely accepted shingle materials. Thus, in recent years, other materials have been developed to function in the same way as slate shingles, and with a similar look. Concrete shingles are a popular roof covering choice due to the structural stability of concrete and the ability to paint such shingles with a variety of colors that replicate various types of natural slate. Unfortunately, concrete shingles also relatively heavy, which makes them difficult to install and their usage may require additional load bearing members to be integrated into the design of structural reinforcement for the building roof. Another popular alternative to natural slate shingles are composite shingles manufactured with a faux slate finish, i.e., "composite slate" shingles. These shingles can be made relatively rigid out of variety of materials, such as thermoplastics and other composites, and are also much easier to produce than a true slate shingle; unlike natural slate, composite slate shingles do not have to be cut and shaped from materials extracted from the earth, but may be fabricated with a mold in mass production. This also allows composite shingles to be produced at a fraction of the cost of forming natural slate shingles. Additionally, continuing improvements in the design of composite shingles have lead to increased life spans for these products.

Even with the significant cost saving realized by using composite slate shingles over natural slate shingles, though, wide acceptance of these composite shingles often hinges on how "real" they look. To achieve a proper faux finish that is suggestive of real slate, composite shingles must have irregularities or other texturing formed into portions of the top surface thereof, i.e., the "exposed" surface. One impediment to producing such a faux finish relates to the machining of the base mold used in fabricating the shingles. To form a molding surface of the base mold, computer-controlled rotating steel cutters are used to carve out the reverse of the pattern desired to be formed in the shingle. The cutters, however, typically leave machining marks or other imperfections on the molding surface that are transferred to the part being molded. With composite slate shingles, these marks are undesirable as they make the shingle look artificially made, eliminating their appeal as a slate substitute. Manually sanding or texturing the mold may diminish the cutting marks, but this adds significant labor costs and delay to mold manufacture. It is also difficult for the cutters to create desired or planned irregularities in the mold that provide the molded shingle with a realistic slate look, as opposed to undesirable imperfections created by the cutters that look artificial.

As such, there is a desire for a better process for shaping and forming the molding surface of a mold used to manufacture composite shingles. Improvements to composite shingle manufacture that would provide such shingles with the look of real slate or other naturally occurring shingle materials would result in increased marketability of the product.

### BRIEF SUMMARY OF THE INVENTION

The present invention facilitates the manufacture of composite shingles that have the appearance of shingles made from natural materials, such as slate. A base mold used for shingle production first has a general pattern cut therein to form a molding surface, which defines a primary shape for a composite shingle. The general pattern is preferably digitized such that the pattern may be cut into the base mold by computer controlled cutting machines. Then, to create the final detailed shape of the molding surface needed to replicate the look of natural slate, an acid etch solution is applied to desired areas of the molding surface. The acid etch may be used to create irregularities or other generally minor effects in the molding surface. The base mold may then be used in conventional molding processes to create shingles with a surface designed for exposure having the look of natural slate. For example, the shingle may present the look of scattered grains of minerals in the exposed surface thereof, or may have graduated material layers or contours in the exposed surface, especially near the shingle perimeter.

With the processes of the present invention use to form the surfaces of molds, more realistic looking composite slate shingles may be manufactured. The invention also reduces the amount of labor needed to attain the "natural" shingle look.

### BRIEF DESCRIPTION OF THE SEVERAL VIEWS OF THE DRAWING

FIG. 1 is a flow chart describing a process for forming a molding surface on a base mold used to manufacture composite shingles in accordance with one embodiment of the present invention;

FIG. 2 is a perspective view illustrating one exemplary shingle design created by the base mold having the molding surface formed in accordance with the process of FIG. 1;

FIG. 3 is a top plan view of the shingle design of FIG. 2;

FIG. 4 is a perspective view illustrating another exemplary shingle design created by the base mold having the molding surface formed in accordance with the process of FIG. 1; and

FIG. 5 is a top plan view of the shingle design of FIG. 4.

### DETAILED DESCRIPTION OF THE INVENTION

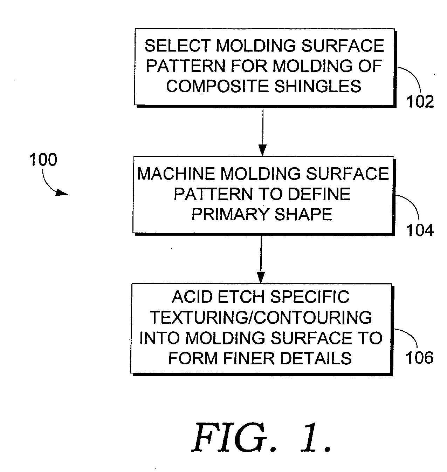

Turning now to the drawings, wherein like reference numerals represent like elements, and in particular FIG. 1, there is illustrated a process 100 for forming a molding surface on a base mold used in the manufacture of composite shingles. The base mold may be any type of molding tool or die used in the art for shingle molding, and may be made from a variety of materials. As an example, the base mold may be made out of modified 4140 alloy steel, but those of skill in the art will appreciate that other base mold materials may be selected. Exemplary molding techniques that may be implemented with the base mold include compression and injection molding, but may also include other categories of closed or open molding techniques as a matter of design choice. Additionally, the term "base mold" is not meant to be limited to a specific type of molding tool, and may include male or female molding tools depending on the type of molding technique selected and specific shingle products desired, among other considerations.

The process 100 begins in step 102 where a specific pattern is selected that will form the general overall dimensions of the molding surface. This pattern serves to define the primary shape for composite shingles molded with the base mold; specific details such as minor contouring and texturing are substantially selected for the molding surface at later steps. Then, in step 104, the base mold is machined to produce the molding surface with the pattern defining the primary shape. This machining is preferably conducted by computer controlled machine tools, such as by implementing computer numeric control (CNC) rotating cutters. In this way, the pattern to be cut into the mold may be digitized for use by the CNC rotating cutters, or other machine tools. Finer details, such as texturing and contouring, are then added to the molding surface in step 106 by applying an acid etch solution to the base mold. The acid etch solution may be selected from a variety of solutions that can cut into metallic surfaces. One preferred acid etch solution is a liquid solution of 35-40% by weight of Ferric Chloride (FeCl₃) in water. Selected application of the acid etch solution to the molding surface allows such surface to have texturing and contouring in repeating patterns, with irregularities, or in any other form according to the desired look for the composite shingle formed within the mold. Further, the acid etch solution can eliminate any machining marks or other imperfections created on the molding surface by the machining tools/cutters that could potentially be transferred to the shingle being molded. At this point, the molding surface of the base mold may be cleaned to remove any excess acid etch solution or other substances and is ready for repeated use in the molding of composite shingles having exposed surfaces with the look of natural materials, such as slate.

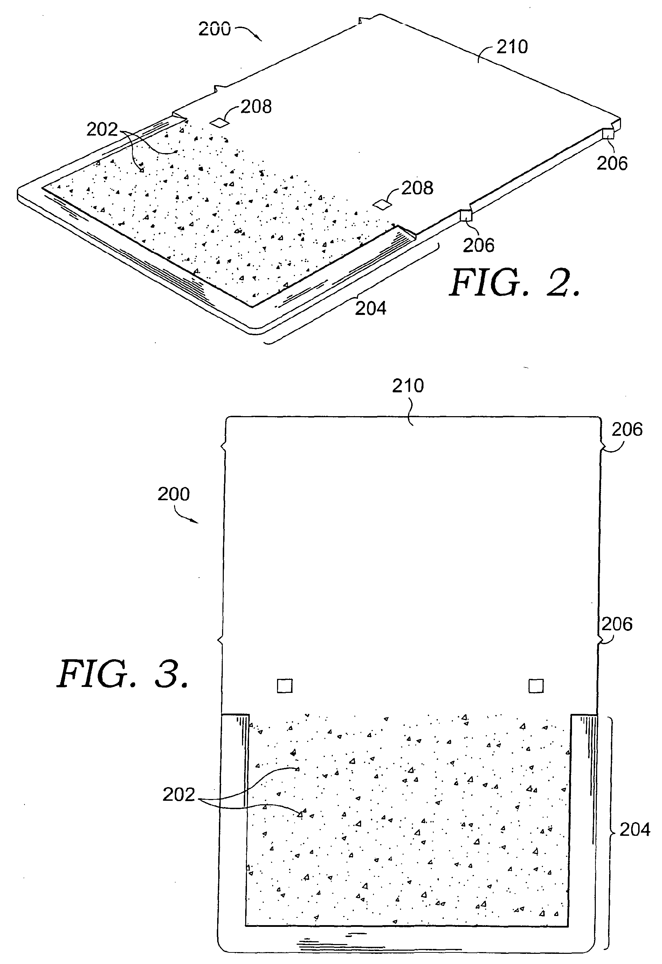

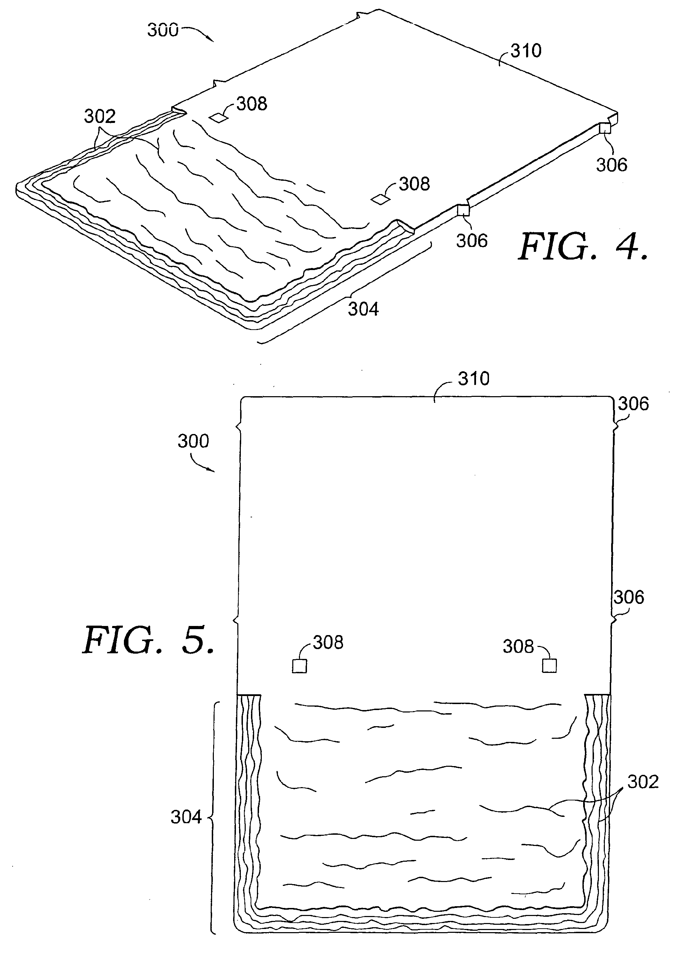

FIGS. 2-5 show exemplary shingle designs that have been molded from molding tools that have undergone the process 100 of FIG. 1. Specifically, FIGS. 2 and 3 illustrate a first composite shingle 200 having texturing in the form of scattered grains of minerals 202 in an exposed surface 204 of the single 200. Likewise, FIGS. 4 and 5 illustrate a second composite shingle 300 having texturing and contouring in the form of graduated material layers or "breaks" 302 in an exposed surface 304 of the shingle 300 to replicate the look of natural slate. Exposed surface regions 204, 304 of the shingles 200, 300, respectively, refer to surfaces that are designed for direct exposure to the outdoor environment upon installation of the shingles in an overlapping pattern. The first and second composite shingles 200, 300 each have spacer tabs 206, 306, respectively, for uniformly spacing and aligning adjacent shingles for installation on a roof, and nail holes 208, 308, respectively, located in unexposed surface regions 210, 310, respectively, for attachment of the shingles to the roof deck. However, those of skill in the art will appreciate that the use and location of spacer tabs, nail holes, and unexposed surface regions are a matter of design choice in composite shingle design, and the shingles 200, 300 depicted in the figures are not meant to limit the range of design options that may be pursued with the process 100 of FIG. 1.

Therefore, it can be seen that the present invention makes possible the manufacture of composite shingles with features designed to give the same a more "natural" look. Texturing and contouring may be selectively added to the exposed surface of each shingle while artificial looking machining marks may easily be removed. It should also be understood that high pH alkaline or basic solutions that are effective in cutting into metals or other materials used as the base mold or tool may be substituted for low pH acid etch solutions. Furthermore, since certain changes may be made in the above invention without departing from the scope hereof, it is intended that all matter contained in the above description or shown in the accompanying drawing be interpreted as illustrative and not in a limiting sense. It is also to be understood that the following claims are to cover certain generic and specific features described herein.

## Claims

1. A method of forming a molding tool with a surface adapted for the molding of composite shingles, comprising the steps of:
selecting a desired pattern for the surface of the molding tool;
machining at least a portion of the pattern into the molding tool to form the surface; and
applying an acid etch solution to selective locations on the surface of the molding tool.

2. The method of claim 1, wherein the acid etch solution is a Ferric Chloride solution.

3. The method of claim 2, wherein the Ferric Chloride solution comprises about 30% to 50% by weight of Ferric Chloride in water.

4. The method of claim 1, wherein the step of machining at least a portion of the pattern into the tool includes machining at least a portion of the pattern into the tool to form the surface with a computer controlled cutting machine.

5. The method of claim 4, wherein the step of selecting a desired pattern for the surface of the molding tool includes digitizing the desired pattern for use by the computer controlled cutting machine.

6. The method of claim 4, wherein the computer controlled cutting machine includes rotating cutters.

7. The method of claim 1, wherein the step of applying an acid etch solution to selective locations on the surface of the molding tool includes applying the acid etch solution to shape the surface of the molding tool such that composite shingles molded with the molding tool surface have an exposed surface with at least one of a texture and contour that are similar to that of a naturally occurring material.

8. The method of claim 7, wherein the naturally occurring material is slate.

9. The method of claim 1, wherein the step of applying an acid etch solution to selective locations on the surface of the molding tool includes applying the acid etch solution to selective locations on the surface of the molding tool where machining marks have been formed to diminish the machining marks.

10. A molding tool having a molding surface for producing composite shingles and formed by:
selecting a desired pattern for the molding surface of the molding tool;
machining at least a portion of the desired pattern into the molding tool to form the molding surface; and
applying an acid etch solution to selective locations on the molding surface.

11. The molding tool of claim 10, wherein the acid etch solution is a Ferric Chloride solution.

12. The molding tool of claim 11, wherein the Ferric Chloride solution comprises about 30% to 50% by weight of Ferric Chloride in water.

13. The molding tool of claim 10, wherein a computer controlled cutting machine is used to machine at least a portion of the pattern into the molding tool to form the molding surface.

14. The molding tool of claim 10, wherein the acid etch solution is applied to selective locations on the molding surface in a way that facilitates composite shingles molded with the molding tool surface being formed with an exposed surface having at least one of a texture and contour that are similar to that of a naturally occurring material.

15. The molding tool of claim 14, wherein the naturally occurring material is slate.

16. The molding tool of claim 10, wherein the acid etch solution is applied to selective locations on the molding surface where machining marks have been formed to diminish the machining marks.
